# EUROPÄISCHE PATENTSCHRIFT

(11) **EP 3 361 030 B1**
(45) Veröffentlichungstag und Bekanntmachung des Hinweises auf die Patenterteilung: **04.03.2026**
(21) Anmeldenummer: 17207609.3
(22) Anmeldetag: 15.12.2017
(51) Int. Cl.: E05F 3/00, E05F 15/611

(54) **ANTRIEB FÜR EINEN TÜR- ODER FENSTERFLÜGEL**
DRIVE FOR A WING OF A DOOR OR A WINDOW
ENTRAÎNEMENT POUR UN BATTANT DE PORTE OU DE FENÊTRE

(30) Priorität: 08.02.2017 DE 102017201958
(43) Veröffentlichungstag der Anmeldung: 15.08.2018
(73) Patentinhaber: GEZE GmbH, 71229 Leonberg (DE)
(72) Erfinder: Burghard (vormals Bauer), Simon, 70771 Leinfelden-Echterdingen (DE); Hucker, Dr., Matthias, 76359 Marxzell (DE); Huber, Dirk, 71409 Schwaikheim (DE); Schüler, Thomas, 70188 Stuttgart (DE); Evertz, Jörg, 8903 Birmensdorf (CH); Hasenfratz, Simon Thomas, 8045 Zürich (CH); Sommer, Remo, 8004 Zürich (CH)

(56) Entgegenhaltungen:
- WO-A1-2010/127379
- WO-A1-2012/152448
- WO-A1-2014/152907
- US-A- 5 687 507

## Beschreibung

Die Erfindung betrifft einen Antrieb für einen Flügel einer Tür, eines Fensters oder dergleichen mit wenigstens einem mechanischen Energiespeicher, der durch eine Öffnungsbewegung des Flügels aufgeladen und mit einer Schließbewegung des Flügels entladen wird.

Antriebe oder Türschließer für bewegliche Türflügel mit einem mechanischen Energiespeicher sind allgemein bekannt. Beim manuellen Öffnen des Türflügels wird der mechanische Energiespeicher mit potentieller Energie aufgeladen, durch die der losgelassene Türflügel wieder geschlossen wird. Der mechanische Energiespeicher kann beispielsweise eine Feder umfassen, die durch das manuelle Öffnen des Türflügels gespannt wird und sich mit dem Schließen des Türflügels wieder entspannt.

Es sind auch bereits hydraulische Türschließer bekannt, deren Schließverhalten wie beispielsweise die Schließzeit, die Schließverzögerung, der Endschlag oder die Öffnungsdämpfung einstellbar ist. Bei solchen hydraulischen Türschließern sind die betreffenden Eigenschaften jedoch statisch, d.h. fest vorgegeben. Sie werden einmal bei der Inbetriebnahme vom Monteur eingestellt und können anschließend nicht mehr verändert werden.

Aus der DE 10 2015 200 284 ist auch bereits ein autarker, generatorisch gedämpfter Türschließer mit wenigstens einem als Generator betreibbaren Elektromotor bekannt, dessen Motorwelle mit dem Flügel in Wirkverbindung steht und dessen Motorklemmen zur Dämpfung der Flügelbewegungen über eine Steuer- und/oder Regelelektronik kurzgeschlossen werden können. Auch dieser Türschließer umfasst wieder einen mechanischen Speicher, der beim manuellen Öffnen des Türflügels mit potentieller Energie aufgeladen wird. Beim Schließen des Flügels durch die gespeicherte potentielle Energie kann die Schließbewegung des Flügels über den als Generator betriebenen Elektromotor gedämpft werden. Dabei können sich die Eigenschaften wie insbesondere das Dämpfungsverhalten des Türschließers zwar dynamisch in Abhängigkeit von aktuellen Bedingungen wie beispielsweise der aktuellen Bewegungsrichtung, der aktuellen Geschwindigkeit und/oder dem aktuellen Öffnungswinkel des Türflügels ändern. Auch bei einem solchen generatorisch gedämpften Türschließer ist jedoch ebenso wie bei den hydraulischen Türschließern das Antriebsverhalten nicht individuell an die aktuellen Bedürfnisse eines jeweiligen Benutzers des Türschließers anpassbar.

WO 2014/152907 A1 und US 5 687 507 A offenbaren ebenfalls einen Antrieb mit einem Türschließer und einem Elektromotor, der zur generatorischen Dämpfung verwendet wird.

Der Erfindung liegt die Aufgabe zugrunde, einen Antrieb der eingangs genannten Art anzugeben, dessen Antriebsverhalten auch nach bereits erfolgter Installation wiederholt variabel an die aktuellen Bedürfnisse eines jeweiligen Benutzers anpassbar sind.

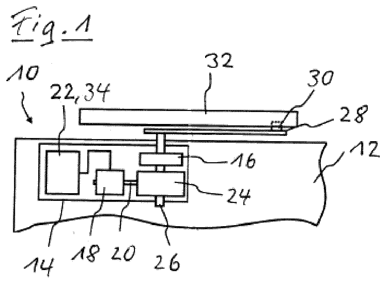

Erfindungsgemäß wird diese Aufgabe durch einen Antrieb mit den Merkmalen des Anspruchs 1 gelöst. Bevorzugte Ausführungsformen des erfindungsgemäßen Antriebs ergeben sich aus den Unteransprüchen, der vorliegenden Beschreibung sowie der Zeichnung.

Der erfindungsgemäße Antrieb für einen Flügel einer Tür, eines Fensters oder dergleichen umfasst wenigstens einen mechanischen Energiespeicher, der durch eine Öffnungsbewegung des Flügels aufgeladen und mit einer Schließbewegung des Flügels entladen wird, wenigstens einen Elektromotor, der über wenigstens eine Motorwelle mit dem Flügel in Wirkverbindung steht und zur Dämpfung der Flügelbewegungen als Generator betreibbar ist, und eine Steuer- und/oder Regelelektronik zur Ansteuerung des Elektromotors. Dabei umfasst die Steuer- und/oder Regelelektronik Mittel, über die das Antriebsverhalten durch einen jeweiligen Benutzer wiederholt variabel vorgebbar und/oder über die das Antriebsverhalten wiederholt in Abhängigkeit vom Verhalten eines jeweiligen Benutzers variabel anpassbar ist.

Aufgrund dieser Ausbildung ist das Antriebsverhalten des Antriebs bzw. Türschließers auch nach bereits erfolgter Installation wiederholt variabel an die aktuellen Bedürfnisse eines jeweiligen Benutzers anpassbar. Benutzer des Antriebs bzw. Türschließers sind außer Personen wie beispielsweise ein für die betreffende Tür zuständiger Hausmeister auch alle Passanten, die die betreffende Tür öffnen, passieren und hinter denen der Türschließer die Tür wieder schließen soll. Grundsätzlich kann der erfindungsgemäße Antrieb jedoch auch für Fenster oder dergleichen vorgesehen sein.

Der erfindungsgemäße Antriebs ist über die Mittel zur variablen Vorgabe und/oder Anpassung des Antriebsverhaltens das Dämpfungsverhalten der generatorischen Dämpfung der Flügelbewegung individuell vorgebbar bzw. anpassbar. Dabei ist zur entsprechenden generatorischen Dämpfung der Flügelbewegung der als Generator betreibbare Elektromotor über die Steuer- und/oder Regelelektronik entsprechend ansteuerbar.

Von Vorteil ist insbesondere auch, wenn das Antriebsverhalten über die Mittel zur variablen Vorgabe und/oder Anpassung in Abhängigkeit von der Art der manuellen Betätigung des Flügels durch einen jeweiligen Benutzer individuell vorgebbar bzw. anpassbar ist.

Dabei sind die Mittel zur variablen Vorgabe und/oder Anpassung des Antriebsverhaltens gemäß einer bevorzugten praktischen Ausführungsform des erfindungsgemäßen Antriebs so ausgeführt, dass nach einem vorgebbaren normalen Öffnen des Flügels durch einen jeweiligen Benutzer mit insbesondere einer vorgebbaren normalen Geschwindigkeit die darauffolgende Schließbewegung des Flügels entsprechend einer bei der Inbetriebnahme vorgenommenen Einstellung generatorisch gedämpft wird.

So kann beispielsweise eine Dämpfungskurve für das normale Schließen durch einen Monteur eingestellt werden, indem dieser den Flügel das erste Mal manuell schließt und durch seine Schließkurve dem Antrieb vorgibt, wie dieser in Zukunft den Flügel generatorisch dämpfen soll. Dabei kann die Schließkurve durch die Art vorgegeben werden, wie der Monteur das erste Mal den Flügel schließt.

Gemäß einer weiteren vorteilhaften praktischen Ausführungsform des erfindungsgemäßen Antriebs sind die Mittel zur variablen Vorgabe und/oder Anpassung des Antriebsverhaltens so ausgeführt, dass bei einer im Vergleich zu einer vorgebbaren normalen Betätigung des Flügels schnelleren Betätigung des Flügels durch einen jeweiligen Benutzer die Öffnungsbewegung des Flügels zusätzlich zu einer konstanten ersten generatorischen Öffnungsdämpfung über eine variable zweite generatorische Dämpfung so gedämpft wird, dass der Flügel nach einem Loslassen bei Erreichen des maximalen Öffnungswinkels zum Stehen kommt.

Es erfolgt somit eine "intelligente Öffnungsdämpfung" des beweglichen Flügels, beispielsweise Türflügels, bei der der Flügel nach dem Loslassen stets so gedämpft wird, dass er unabhängig von der kinetischen Energie beim Loslassen nicht in der Offenlage anschlägt. Dabei können die Mittel zur variablen Vorgabe und/oder Anpassung des Antriebsverhaltens der Steuer- und/oder Regelelektronik beispielsweise mittels einer Pulsweitenmodulation einen Kurzschluss der Anschlussklemmen des als Generator betreibbaren Elektromotors und damit die variable zweite Dämpfung der Öffnungsbewegung des beweglichen Flügels so regeln, dass der Flügel bei ausreichender kinetischer Energie ohne Anzuschlagen, in seiner maximalen Offenlage anhält. In Abhängigkeit von der kinetischen Energie im Flügel setzt die zweite variable Dämpfung früher oder später ein, um den Bremsverlauf optimal an die aktuelle kinetische Energie im Flügel und an die Umgebungsbedingungen wie beispielsweise Temperatur und/oder Reibungsverhältnisse und/oder Windverhältnisse usw. anzupassen. Die zweite Dämpfung kann beispielsweise über eine Dämpfungskennlinie so geregelt werden, dass der Flügel genau in der Offenlage zum Stehen kommt. Erfindungsgemäß ist wenigstens ein Sensor zur Erfassung wenigstens einer physikalischen Größe vorgesehen, die die Öffnungsbewegung des Türflügels repräsentiert. Die Ausgangssignale eines solchen Sensors werden den Mitteln zur variablen Vorgabe und/oder Anpassung des Antriebsverhaltens der Steuer- und/oder Regelelektronik zugeführt.

Erfindungsgemäß sind die Mittel zur variablen Vorgabe und/oder Anpassung des Antriebsverhaltens so ausgeführt, dass bei einer im Vergleich zu einer vorgebbaren normalen Betätigung des Flügels langsameren, unregelmäßigeren und/oder zittrigeren Betätigung des Flügels durch einen jeweiligen Benutzer der Flügel vor einem jeweiligen Schließen zunächst eine vorgebbare Zeit offen gehalten und anschließend durch eine entsprechende generatorische Dämpfung der Schließbewegung des Flügels langsamer als mit einer vorgebbaren normalen Geschwindigkeit wieder geschlossen wird.

Es kann dadurch beispielsweise sichergestellt werden, dass behinderte Personen, ältere Menschen oder Kinder eine Tür problemloser passieren können. Über die Mittel zur variablen Vorgabe und/oder Anpassung des Antriebsverhaltens der Steuer- und/oder Regelelektronik kann der Geschwindigkeitsverlauf beim Öffnen des Flügels erfasst und das Dämpfungsverhalten des Antriebs beim Schließen des Flügels entsprechend angepasst werden.

Von Vorteil ist insbesondere auch, wenn das Antriebsverhalten über die Mittel zur variablen Vorgabe und/oder Anpassung in Abhängigkeit davon individuell vorgebbar bzw. anpassbar ist, ob ein jeweiliger Benutzer die betreffende Tür mit sperrigen Gegenständen, einem Rollstuhl oder dergleichen passieren will oder nicht.

Falls ein Passant beispielsweise Gepäck oder Getränkekisten oder andere sperrige Gegenstände durch die betreffende Tür tragen oder einen Behinderten im Rollstuhl durch die Tür schieben will, kann der Türflügel somit entsprechend länger offengehalten werden und anschließend mit einer vorgebbaren normalen Geschwindigkeit schließen. Ein Passant kann den normalen Schließvorgang des Türflügels beispielsweise unterbrechen, indem er diesen für eine vorgebbare Zeit festhält. Die Mittel zur variablen Vorgabe und/oder Anpassung des Antriebsverhaltens der Steuer- und/oder Regelelektronik erfassen dies anhand einer entsprechenden Signalisierung und können dann auf eine maximale Dämpfung umschalten. Sobald der Passant beispielsweise sein Gepäck durch die Tür getragen oder den Rollstuhl durch die Tür geschoben hat, kann er den Türflügel leicht in Öffnungsrichtung antippen, was durch die Mittel zur variablen Vorgabe und/oder Anpassung des Antriebsverhaltens wieder erkannt wird, woraufhin der Schließvorgang mit normaler Dämpfung fortgesetzt werden kann.

Eine weitere zweckmäßige praktische Ausführungsform des erfindungsgemäßen Antriebs zeichnet sich dadurch aus, dass über die Mittel zur variablen Vorgabe und/oder Anpassung des Antriebsverhaltens die jeweilige Öffnungszeit, während der der Flügel offengehalten wird, in Abhängigkeit von der aktuellen Begehfrequenz der betreffenden Tür und/oder in Abhängigkeit von der Tageszeit variabel einstellbar ist.

Falls die Tür in kurzer Zeit öfter begangen wird, kann sie somit relativ länger offenbleiben. Sinkt dagegen die Begehfrequenz wieder, so kann die Tür wieder entsprechend einem vorgebbaren Schließverhalten normal schließen. Zudem kann eine Tür zu bestimmten Zeiten wie beispielsweise tagsüber länger offengehalten und zu anderen Zeiten wie beispielsweise nachts relativ schneller geschlossen werden.

Gemäß einer weiteren bevorzugten praktischen Ausführungsform umfasst der Antrieb eine Feststelleinrichtung, die durch einen jeweiligen Benutzer über die Mittel zur variablen Vorgabe und/oder Anpassung des Antriebsverhaltens bei einem insbesondere beliebig wählbaren Öffnungswinkel aktivierbar ist. Dabei ist der Flügel entgegen der Kraft des mechanischen Speichers insbesondere feststellbar, indem über die Steuer- und/oder Regelelektronik der Elektromotor mit externer elektrischer Energie beaufschlagbar und/oder eine Bremsvorrichtung zur Beaufschlagung einer Motorwelle des Elektromotors ansteuerbar ist.

Zum Aktivieren der Feststellung kann beispielsweise ein Türdrücker mit einem Nusskontaktschalter ausgestaltet sein. Öffnet ein jeweiliger Benutzer den Türflügel bis zum gewünschten Feststellwinkel und betätigt er hier den Türdrücker, so erkennen die Mittel zur variablen Vorgabe und/oder Anpassung des Antriebsverhaltens die entsprechende Betätigung des Türdrückers außerhalb der Schließlage, woraufhin die Feststellung aktiviert wird. Bevorzugt sind die Mittel zur variablen Vorgabe und/oder Anpassung des Antriebsverhaltens auch so ausgeführt, dass der festgestellte Flügel durch einen jeweiligen Benutzer wieder aus der Feststellung lösbar ist.

Von Vorteil ist insbesondere auch, wenn die Mittel zur variablen Vorgabe und/oder Anpassung des Antriebsverhaltens wenigstens eine Einrichtung zur manuellen, sprachgesteuerten, über eine drahtlose Kommunikation übertragbaren und/oder dergleichen Eingabe des jeweils gewünschten Antriebsverhaltens durch einen jeweiligen Benutzer umfassen.

So kann ein jeweiliger Benutzer beispielsweise zum Lösen eines Türflügels nochmals den Türdrücker betätigen oder ein Passwort wie beispielsweise "lösen" benutzen oder die Feststellung mittels Funk oder einer Fernbedienung auslösen oder den Flügel einfach von Hand zuziehen.

Umfasst der Antrieb eine Feststelleinrichtung, so kann ein Türflügel wie durch eine Kette lediglich begrenzt freigegeben und an einem weiteren Öffnen gehindert werden. Für die Aktivierung der "Kette" kann der Benutzer vor dem Öffnen der Tür beispielsweise den Türdrücker entsprechend einer bestimmten Sequenz betätigen oder ein Passwort benutzen und anschließend innerhalb einer vorgebbaren Zeit das Kennwort "Kette" verwenden, woraufhin der Türflügel über die Mittel zur variablen Vorgabe und/oder Anpassung des Antriebsverhaltens der Steuer- und/oder Regelelektronik die Feststellvorrichtung bei lediglich etwas geöffnetem Türflügel aktiviert, um ein weiteres Öffnen des Türflügels zu blockieren. Zum Freigeben des weiteren Öffnens des Flügels kann der Benutzer vor dem weiteren Öffnen des Türflügels beispielsweise den Türdrücker mit einer anderen oder derselben Sequenz wie zum Aktivieren der Feststellung betätigen oder das Passwort benutzen und anschließend innerhalb einer vorgebbaren Zeit beispielsweise das Kennwort "öffnen" verwenden. Anschließend wird die Feststelleinrichtung wieder gelöst, so dass ein weiteres Öffnen des Türflügels freigegeben wird. Durch eine entsprechende Ansteuerung der Feststelleinrichtung über die Mittel zur variablen Vorgabe und/oder Anpassung des Antriebsverhaltens kann die Feststelleinrichtung somit nach Art einer Kette genutzt werden. Ein jeweiliger Benutzer kann den Türflügel somit beispielsweise nach einem Läuten an der Tür zunächst nur einen Spalt weit öffnen und erst einmal nachsehen, wer vor der Tür steht, bevor er entscheidet, ob er der jeweiligen Person die Tür ganz öffnet oder nicht.

Bevorzugt umfasst der Antrieb Mittel zur Erfassung der aktuellen Position, der aktuellen Geschwindigkeit und/oder der aktuellen Beschleunigung des Flügels. Zudem sind die Mittel zur variablen Vorgabe und/oder Anpassung des Antriebsverhaltens bevorzugt so ausgeführt, dass die Schließ- und/oder Öffnungsbewegung des Flügels in Abhängigkeit von der erfassten aktuellen Flügelposition, der erfassten aktuellen Flügelgeschwindigkeit und/oder der erfassten aktuellen Flügelbeschleunigung generatorisch dämpfbar ist.

Gemäß einer zweckmäßigen praktischen Ausführungsform des erfindungsgemäßen Antriebs umfasst die Steuer- und/oder Regelelektronik einen Dämpfungsstromkreis, an den die Motorklemmen des Elektromotors anlegbar sind. Der Dämpfungsstromkreis umfasst wenigstens ein Schaltelement, über das die Motorklemmen des Elektromotors kurzschließbar sind.

Dabei kann die Steuer- und/oder Regelelektronik insbesondere eine Steuer- und/oder Regeleinheit umfassen, über die das Schaltelement zur Dämpfung der Flügelbewegungen pulsweitenmoduliert ansteuerbar ist.

Für einen zumindest teilweise autarken Betrieb kann der Antrieb zudem einen elektrischen Speicher umfassen, der über wenigstens einen generatorisch betreibbaren Elektromotor aufladbar und über den die Steuer- und/oder Regelelektronik mit elektrischer Energie versorgbar ist.

Die Erfindung wird im Folgenden anhand eines Ausführungsbeispiels unter Bezugnahme auf die Zeichnung näher erläutert. Dabei zeigt die einzige Figur der Zeichnung in schematischer Darstellung eine beispielhafte Ausführungsform eines erfindungsgemäßen Antriebs 10 für einen Flügel 12 einer Tür. Grundsätzlich kann der Antrieb 10 jedoch auch für den Flügel eines Fensters oder dergleichen vorgesehen sein.

Der Antrieb 10 umfasst ein Gehäuse 14, einen mechanischen Energiespeicher 16, der durch eine Öffnungsbewegung des Flügels 12 aufgeladen und mit einer Schließbewegung des Flügels 12 entladen wird, wenigstens einen Elektromotor 18, der über wenigstens eine Motorwelle 20 mit dem Flügel 12 in Wirkverbindung steht und zur Dämpfung der Flügelbewegungen als Generator betreibbar ist, und eine Steuer- und/oder Regelelektronik 22 zur Ansteuerung des Elektromotors 18.

Der Antrieb 10 ist im vorliegenden Fall über sein Gehäuse 14 beispielsweise am Flügel 12 befestigt. Die Motorwelle 20 des Elektromotors 18 ist über ein Getriebe 24 mit einer Abtriebswelle 26 des Antriebs 10 gekoppelt, mit der im vorliegenden Fall beispielsweise ein Gleitarm 28 drehfest verbunden ist, der an seinem freien Ende mit einem Gleitstein 30 versehen ist, der in einer blendenfest montierten Gleitschiene 32 geführt ist.

Die Steuer- und/oder Regelelektronik 22 umfasst Mittel 34, über die das Antriebsverhalten durch einen jeweiligen Benutzer wiederholt variabel vorgebbar und/oder über die das Antriebsverhalten wiederholt in Abhängigkeit vom Verhalten eines jeweiligen Benutzers variabel anpassbar ist.

Über die Mittel 34 zur variablen Vorgabe und/oder Anpassung des Antriebsverhaltens ist insbesondere das Dämpfungsverhalten der generatorischen Dämpfung der Flügelbewegungen individuell vorgebbar bzw. anpassbar.

Das Antriebsverhalten ist über die Mittel 34 zur variablen Vorgabe und/oder Anpassung in Abhängigkeit von der Art der manuellen Betätigung des Flügels 12 durch einen jeweiligen Benutzer individuell vorgebbar bzw. anpassbar.

Dabei können die Mittel 34 zur variablen Vorgabe und/oder Anpassung des Antriebsverhaltens insbesondere so ausgeführt sein, dass nach einem vorgebbaren normalen Öffnen des Flügels 12 durch einen jeweiligen Benutzer mit insbesondere einer vorgebbaren normalen Geschwindigkeit die darauffolgende Schließbewegung des Flügels 12 entsprechend einer bei der Inbetriebnahme vorgenommenen Einstellung generatorisch gedämpft wird.

Die Mittel 34 zur variablen Vorgabe und/oder Anpassung des Antriebsverhaltens können insbesondere auch so ausgeführt sein, dass bei einer im Vergleich zu einer vorgebbaren normalen Betätigung des Flügels 12 schnelleren Betätigung des Flügels 12 durch einen jeweiligen Benutzer die Öffnungsbewegung des Flügels 12 zusätzlich zu einer konstanten ersten generatorischen Öffnungsdämpfung über eine variable zweite generatorische Dämpfung so gedämpft wird, dass der Flügel 12 nach einem Loslassen bei Erreichen des maximalen Öffnungswinkels anhält.

Erfindungsgemäß sind die Mittel 34 zur variablen Vorgabe und/oder Anpassung des Antriebsverhalten so ausgeführt, dass bei einer im Vergleich zu einer vorgebbaren normalen Betätigung des Flügels 12 langsameren, unregelmäßigeren und/oder zittrigeren Betätigung des Flügels 12 durch einen jeweiligen Benutzer der Flügel 12 vor einem jeweiligen Schließen zunächst eine vorgebbare Zeit offengehalten und anschließend durch eine entsprechende generatorische Dämpfung der Schließbewegung des Flügels 12 langsamer als mit einer vorgebbaren normalen Geschwindigkeit wieder geschlossen wird.

Über die Mittel 34 zur variablen Vorgabe und/oder Anpassung ist das Antriebsverhalten insbesondere auch in Abhängigkeit davon individuell vorgebbar bzw. anpassbar, ob ein jeweiliger Benutzer die betreffende Tür mit sperrigen Gegenständen, einem Rollstuhl oder dergleichen passieren will oder nicht.

Zudem kann über die Mittel 34 zur variablen Vorgabe und/oder Anpassung des Antriebsverhaltens die jeweilige Öffnungszeit, während der der Flügel 12 offengehalten wird, in Abhängigkeit von der aktuellen Begehfrequenz der betreffenden Tür und/oder in Abhängigkeit von der Tageszeit variabel einstellbar sein.

Der Antrieb 10 kann eine Feststelleinrichtung umfassen, die durch einen jeweiligen Benutzer über die Mittel 34 zur variablen Vorgabe und/oder Anpassung des Antriebsverhaltens bei einem insbesondere beliebig wählbaren Öffnungswinkel aktivierbar ist. Dabei ist der Flügel 12 entgegen der Kraft des mechanischen Speichers 16 insbesondere feststellbar, indem über die Steuer- und/oder Regelelektronik 22 der Elektromotor 18 mit externer elektrischer Energie beaufschlagbar und/oder eine Bremsvorrichtung zur Beaufschlagung einer Motorwelle 20 des Elektromotors 18 ansteuerbar ist.

Zudem können die Mittel 34 zur variablen Vorgabe und/oder Anpassung des Antriebsverhaltens insbesondere so ausgeführt sein, dass der festgestellte Flügel 12 durch einen jeweiligen Benutzer auch wieder aus der Feststellung lösbar ist.

Die Mittel 34 zur variablen Vorgabe und/oder Anpassung des Antriebsverhaltens können insbesondere auch wenigstens eine Einrichtung zur manuellen, sprachgesteuerten, über eine drahtlose Kommunikation übertragbaren und/oder dergleichen Eingabe des jeweils gewünschten Antriebsverhaltens durch einen jeweiligen Benutzer umfassen.

Der Antrieb 10 kann insbesondere auch Mittel zur Erfassung der aktuellen Position, der aktuellen Geschwindigkeit und/oder der aktuellen Beschleunigung des Flügels 12 umfassen. Dabei können die Mittel 34 zur variablen Vorgabe und/oder Anpassung des Antriebsverhaltens insbesondere so ausgeführt sein, dass die Schließ- und/oder Öffnungsbewegung des Flügels in Abhängigkeit von der erfassten aktuellen Flügelposition, der erfassten aktuellen Flügelgeschwindigkeit und/oder der erfassten aktuellen Flügelbeschleunigung generatorisch dämpfbar ist.

Die Steuer- und/oder Regelelektronik 22 oder deren Mittel 34 zur variablen Vorgabe und/oder Anpassung des Antriebsverhaltens können insbesondere einen Dämpfungsstromkreis umfassen, an den die Motorklemmen des Elektromotors 18 anlegbar sind. Ein solcher Dämpfungsstromkreis kann wenigstens ein Schaltelement umfassen, über das die Motorklemmen des Elektromotors 18 kurzschließbar sind. Dabei kann die Steuer- und/oder Regelelektronik 22 insbesondere eine Steuer- und/oder Regeleinheit umfassen, über die das Schaltelement zur Dämpfung der Flügelbewegungen pulsweitenmoduliert ansteuerbar ist.

Der Antrieb 10 bzw. dessen Mittel 34 zur variablen Vorgabe und/oder Anpassung des Antriebsverhaltens können mit elektrischen Eingängen ausgerüstet sein, an die zusätzliche Eingabemittel wie beispielsweise ein Türdrücker mit Kontakt, ein Schalter, ein in der Nähe der Tür vorgesehener Taster und/oder dergleichen anschließbar sind. Wie ebenfalls bereits erwähnt, kann der Antrieb 10 auch mit einer drahtlosen Kommunikation ausgerüstet sein, über die zusätzliche Eingabemittel wie beispielsweise ein Türdrücker mit Funksender oder Infrarot, eine Fernbedienung, ein Schalter mit Funksender oder Infrarot und/oder dergleichen kommunizieren.

Ein entsprechender Antrieb 10 oder Türschließer kann durch einen jeweiligen Passanten beispielsweise betätigt werden, indem er definierte Bewegungsvorgänge am Türflügel ausführt, die sich vom normalen Begehen unterscheiden, oder dem Antrieb oder Türschließer mit integrierter Dämpfungsvorrichtung sagt, wie dieser den Flügel dämpfen soll, oder den Antrieb 10 bzw. Türschließer mit integrierter Dämpfungsvorrichtung über Schalter, Taster und/oder dergleichen bedient, oder den Antrieb 10 bzw. Türschließer mit integrierter Dämpfungsvorrichtung über eine drahtlose Verbindung oder dergleichen bedient. Dabei sind die genannten Bedienmittel beliebig austauschbar oder kombinierbar.

### Bezugszeichenliste

- 10: Antrieb
- 12: Flügel
- 14: Gehäuse
- 16: mechanischer Energiespeicher
- 18: Elektromotor
- 20: Motorwelle
- 22: Steuer- und/oder Regelelektronik
- 24: Getriebe
- 26: Abtriebswelle
- 28: Gleitarm
- 30: Gleitstein
- 32: Gleitschiene
- 34: Mittel zur variablen Vorgabe und/oder Anpassung des Antriebsverhaltens

## Patentansprüche

1. Antrieb (10) für einen Flügel (12) einer Tür, eines Fensters oder dergleichen, mit wenigstens einem mechanischen Energiespeicher (16), der durch eine Öffnungsbewegung des Flügels (12) aufgeladen und mit einer Schließbewegung des Flügels (12) entladen wird, wenigstens einem Elektromotor (18), der über wenigstens eine Motorwelle (20) mit dem Flügel (12) in Wirkverbindung steht und zur Dämpfung der Flügelbewegungen als Generator betreibbar ist, und einer Steuer- und/oder Regelelektronik (22) zur Ansteuerung des Elektromotors (18), wobei die Steuer- und/oder Regelelektronik (22) Mittel (34) umfasst, über die das Antriebsverhalten durch einen jeweiliger Benutzer wiederholt variabel vorgebbar und/oder über die das Antriebsverhalten wiederholt in Abhängigkeit vom Verhalten eines jeweiligen Benutzers variabel anpassbar ist, wobei ein Sensor zur Erfassung wenigstens einer physikalischen Größe vorgesehen ist, die die Öffnungsbewegung des Türflügels repräsentiert, und Ausgangssignale des Sensors den Mitteln zur variablen Vorgabe und/ oder Anpassung des Antriebsverhaltens der Steuer- und/oder Regelelektronik zugeführt werden,
**dadurch gekennzeichnet, dass**
die Mittel (34) zur variablen Vorgabe und/oder Anpassung des Antriebsverhaltens so ausgeführt sind, dass bei einer im Vergleich zu einer vorgebbaren normalen Betätigung des Flügels (12) langsameren, unregelmäßigeren und/oder zitterigeren Betätigung des Flügels (12) durch einen jeweiligen Benutzer der Flügel (12) vor einem jeweiligen Schließen zunächst eine vorgebbare Zeit offen gehalten und anschließend durch eine entsprechende generatorische Dämpfung der Schließbewegung des Flügels (12) langsamer als mit einer vorgebbaren normalen Geschwindigkeit wieder geschlossen wird.

2. Antrieb nach Anspruch 1,
**dadurch gekennzeichnet, dass** über die Mittel (34) zur variablen Vorgabe und/oder Anpassung des Antriebsverhaltens das Dämpfungsverhalten der generatorischen Dämpfung der Flügelbewegungen individuell vorgebbar bzw. anpassbar ist.

3. Antrieb nach Anspruch 1 oder 2,
**dadurch gekennzeichnet, dass** das Antriebsverhalten über die Mittel (34) zur variablen Vorgabe und/oder Anpassung in Abhängigkeit von der Art der manuellen Betätigung des Flügels (12) durch einen jeweiligen Benutzer individuell vorgebbar bzw. anpassbar ist.

4. Antrieb nach Anspruch 3,
**dadurch gekennzeichnet, dass** die Mittel (34) zur variablen Vorgabe und/oder Anpassung des Antriebsverhaltens so ausgeführt sind, dass nach einem vorgebbaren normalen Öffnen des Flügels (12) durch einen jeweiligen Benutzer mit insbesondere einer vorgebbaren normalen Geschwindigkeit die darauffolgende Schließbewegung des Flügels (12) entsprechend einer bei der Inbetriebnahme vorgenommenen Einstellung generatorisch gedämpft wird.

5. Antrieb nach Anspruch 3 oder 4,
**dadurch gekennzeichnet, dass** die Mittel (34) zur variablen Vorgabe und/oder Anpassung des Antriebsverhaltens so ausgeführt sind, dass bei einer im Vergleich zu einer vorgebbaren normalen Betätigung des Flügels (12) schnelleren Betätigung des Flügels (12) durch einen jeweiligen Benutzer die Öffnungsbewegung des Flügels (12) zusätzlich zu einer konstanten ersten generatorischen Öffnungsdämpfung über eine variable zweite generatorische Dämpfung so gedämpft wird, dass der Flügel (12) nach einem Loslassen bei Erreichen des maximalen Öffnungswinkels zum Stehen kommt.

6. Antrieb nach zumindest einem der vorstehenden Ansprüche,
**dadurch gekennzeichnet, dass** das Antriebsverhalten über die Mittel (34) zur variablen Vorgabe und/oder Anpassung in Abhängigkeit davon individuell vorgebbar bzw. anpassbar ist, ob ein jeweiliger Benutzer die betreffende Tür mit sperrigen Gegenständen, einem Rollstuhl oder dergleichen passieren will oder nicht.

7. Antrieb nach zumindest einem der vorstehenden Ansprüche,
**dadurch gekennzeichnet, dass** über die Mittel (34) zur variablen Vorgabe und/oder Anpassung des Antriebsverhaltens die jeweilige Öffnungszeit, während der der Flügel (12) offengehalten wird, in Abhängigkeit von der aktuellen Begehfrequenz der betreffenden Tür und /oder in Abhängigkeit von der Tageszeit variabel einstellbar ist.

8. Antrieb nach zumindest einem der vorstehenden Ansprüche,
**dadurch gekennzeichnet, dass** der Antrieb (10) eine Feststelleinrichtung umfasst, die durch einen jeweiliger Benutzer über die Mittel (34) zur variablen Vorgabe und/oder Anpassung des Antriebsverhaltens bei einem insbesondere beliebig wählbaren Öffnungswinkel aktivierbar ist.

9. Antrieb nach Anspruch 8,
**dadurch gekennzeichnet, dass** der Flügel (12) entgegen der Kraft des mechanischen Speichers (16) feststellbar ist, indem über die Steuer- und/oder Regelelektronik (22) der Elektromotor (18) mit externer elektrischer Energie beaufschlagbar und/oder eine Bremsvorrichtung zur Beaufschlagung einer Motorwelle (20) des Elektromotors (18) ansteuerbar ist.

10. Antrieb nach Anspruch 8 oder 9,
**dadurch gekennzeichnet, dass** die Mittel (34) zur variablen Vorgabe und/oder Anpassung des Antriebsverhaltens so ausgeführt sind, dass der festgestellte Flügel (12) durch einen jeweiligen Benutzer wieder aus der Feststellung lösbar ist.

11. Antrieb nach zumindest einem der vorstehenden Ansprüche,
**dadurch gekennzeichnet, dass** die Mittel (34) zur variablen Vorgabe und/oder Anpassung des Antriebsverhaltens wenigstens eine Einrichtung zur manuellen, sprachgesteuerten, über eine drahtlose Kommunikation übertragbaren und/oder dergleichen Eingabe des jeweils gewünschten Antriebsverhaltens durch einen jeweiligen Benutzer umfassen.

12. Antrieb nach zumindest einem der vorstehenden Ansprüche,
**dadurch gekennzeichnet, dass** der Antrieb (10) Mittel zur Erfassung der aktuellen Position, der aktuellen Geschwindigkeit und/oder der aktuellen Beschleunigung des Flügels (12) umfasst und die Mittel (34) zur variablen Vorgabe und/oder Anpassung des Antriebsverhaltens so ausgeführt sind, dass die Schließ- und/oder Öffnungsbewegung des Flügels in Abhängigkeit von der erfassten aktuellen Flügelposition, der erfassten aktuellen Flügelgeschwindigkeit und/oder der erfassten aktuellen Flügelbeschleunigung generatorisch dämpfbar ist.

13. Antrieb nach zumindest einem der vorstehenden Ansprüche,
**dadurch gekennzeichnet, dass** die Steuer- und/oder Regelelektronik (22) einen Dämpfungsstromkreis umfasst, an den die Motorklemmen des Elektromotors (18) angelegbar sind, und der Dämpfungsstromkreis wenigstens ein Schaltelement umfasst, über das die Motorklemmen des Elektromotors (18) kurzschließbar sind.

14. Antrieb nach Anspruch 13,
**dadurch gekennzeichnet, dass** die Steuer- und/oder Regelelektronik (22) eine Steuer- und/oder Regeleinheit umfasst, über die das Schaltelement zur Dämpfung der Flügelbewegungen pulsweitenmoduliert ansteuerbar ist.

## Claims

1. Drive (10) for a leaf (12) of a door, a window or the like, having at least one mechanical energy store (16) which is charged by an opening movement of the leaf (12) and is discharged by a closing movement of the leaf (12), at least one electric motor (18) which is operatively connected to the leaf (12) by means of at least one motor shaft (20) and can be operated as a generator for damping the leaf movements, and an open-loop and/or closed-loop control electronics system (22) for actuating the electric motor (18), wherein the open-loop and closed-loop control electronics system (22) comprises means (34) by way of which the drive behaviour can be repeatedly variably specified by a respective user and/or by way of which the drive behaviour can be repeatedly variably adapted depending on the behaviour of a respective user, wherein a sensor for detecting at least one physical variable is provided, the physical variable representing the opening movement of the door leaf, and output signals from the sensor are fed to the means for variably specifying and/or adapting the drive behaviour of the open-loop and closed-loop control electronics system,
**characterized in that**
the means (34) for variably specifying and/or adapting the drive behaviour are designed such that, in the case of slower, more irregular and/or more intermittent actuation of the leaf (12) by a respective user in comparison to specifiable normal actuation of the leaf (12), the leaf (12) is initially kept open for a specifiable time before being respectively closed and is subsequently closed again more slowly than at a specifiable normal speed by corresponding regenerative damping of the closing movement of the leaf (12).

2. Drive according to Claim 1,
**characterized in that** the damping behaviour of the regenerative damping of the leaf movements can be individually specified or adapted by way of the means (34) for variably specifying and/or adapting the drive behaviour.

3. Drive according to Claim 1 or 2,
**characterized in that** the drive behaviour can be individually specified or adapted by way of the means (34) for variable specification and/or adaptation depending on the type of manual actuation of the leaf (12) by a respective user.

4. Drive according to Claim 3,
**characterized in that** the means (34) for variably specifying and/or adapting the drive behaviour are designed such that, after specifiable normal opening of the leaf (12) by a respective user at, in particular, a specifiable normal speed, the subsequent closing movement of the leaf (12) is regeneratively damped in accordance with a setting made during start-up.

5. Drive according to Claim 3 or 4,
**characterized in that** the means (34) for variably specifying and/or adapting the drive behaviour are designed such that, in the case of faster actuation of the leaf (12) by a respective user in comparison to specifiable normal actuation of the leaf (12), the opening movement of the leaf (12) is damped, in addition to constant first regenerative opening damping, by way of variable second regenerative damping such that the leaf (12) comes to a standstill after being released when the maximum opening angle is reached.

6. Drive according to at least one of the preceding claims,
**characterized in that** the drive behaviour can be individually specified or adapted by way of the means (34) for variable specification and/or adaptation depending on whether or not a respective user wishes to pass through the door in question with bulky objects, a wheelchair or the like.

7. Drive according to at least one of the preceding claims,
**characterized in that** the respective opening time during which the leaf (12) is kept open can be variably adjusted depending on the current operating frequency of the door in question and/or depending on the time of day by way of the means (34) for variably specifying and/or adapting the drive behaviour.

8. Drive according to at least one of the preceding claims,
**characterized in that** the drive (10) comprises a locking device which can be activated by a respective user by way of the means (34) for variably specifying and/or adapting the drive behaviour at an opening angle which can be selected as desired in particular.

9. Drive according to Claim 8,
**characterized in that** the leaf (12) can be locked against the force of the mechanical store (16) by virtue of it being possible to apply external electrical energy to the electric motor (18) and/or it being possible to actuate a brake apparatus for acting on a motor shaft (20) of the electric motor (18) by way of the open-loop and/or closed-loop control electronics system (22).

10. Drive according to Claim 8 or 9,
**characterized in that** the means (34) for variably specifying and/or adapting the drive behaviour are designed such that the locked leaf (12) can be released from the locking again by a respective user.

11. Drive according to at least one of the preceding claims,
**characterized in that** the means (34) for variably specifying and/or adapting the drive behaviour comprise at least one device for manual input, voice-controlled input, input transmittable via wireless communication and/or similar input of the respectively desired drive behaviour by a respective user.

12. Drive according to at least one of the preceding claims,
**characterized in that** the drive (10) comprises means for detecting the current position, the current speed and/or the current acceleration of the leaf (12) and the means (34) for variably specifying and/or adapting the drive behaviour are designed such that the closing and/or opening movement of the leaf can be regeneratively damped depending on the detected current leaf position, the detected current leaf speed and/or the detected current leaf acceleration.

13. Drive according to at least one of the preceding claims,
**characterized in that** the open-loop and/or closed-loop control electronics system (22) comprises an electrical damping circuit to which the motor terminals of the electric motor (18) can be applied, and the electrical damping circuit comprises at least one switching element, by way of which the motor terminals of the electric motor (18) can be shorted.

14. Drive according to Claim 13,
**characterized in that** the open-loop and/or closed-loop control electronics system (22) comprises an open-loop and/or closed-loop control unit, by way of which the switching element can be actuated in a pulse-width-modulated manner in order to damp the leaf movements.

## Revendications

1. Mécanisme d'entraînement (10) pour un battant (12) d'une porte, d'une fenêtre ou analogue, comportant au moins un accumulateur d'énergie mécanique (16) chargé par un mouvement d'ouverture du battant (12) et déchargé par un mouvement de fermeture du battant (12), au moins un moteur électrique (18), qui est en liaison active avec le battant (12) par l'intermédiaire d'au moins un arbre de moteur (20) et qui peut fonctionner comme générateur pour amortir les mouvements du battant, et une électronique de commande et/ou de régulation (22) pour commander le moteur électrique (18), l'électronique de commande et/ou de régulation (22) comprenant des moyens (34) permettant de prédéfinir de manière variable et répétée le comportement d'entraînement par un utilisateur respectif et/ou d'adapter de manière répétée le comportement d'entraînement en fonction du comportement d'un utilisateur respectif, un capteur étant prévu pour détecter au moins une grandeur physique représentant le mouvement d'ouverture du battant de porte, et des signaux de sortie du capteur étant envoyés aux moyens de prédéfinition et/ou d'adaptation variable du comportement d'entraînement de l'électronique de commande et/ou de régulation,
**caractérisé en ce que**
les moyens (34) de prédéfinition et/ou d'adaptation variable du comportement d'entraînement sont conçus de telle sorte que, lors d'un actionnement plus lent, plus irrégulier et/ou plus intermittent du battant (12) par un utilisateur respectif par comparaison à un actionnement normal prédéfinissable du battant (12), avant une fermeture respective, le battant (12) est initialement maintenu ouvert pendant un temps prédéfinissable et est ensuite refermé plus lentement qu'à une vitesse normale prédéfinissable par un amortissement génératif correspondant du mouvement de fermeture du battant (12).

2. Mécanisme d'entraînement selon la revendication 1, **caractérisé en ce que** le comportement d'amortissement de l'amortissement génératif des mouvements du battant peut être prédéfini ou adapté individuellement par l'intermédiaire des moyens (34) de prédéfinition et/ou d'adaptation variable du comportement d'entraînement.

3. Mécanisme d'entraînement selon la revendication 1 ou 2,
**caractérisé en ce que** le comportement d'entraînement peut être prédéfini ou adapté individuellement par un utilisateur respectif par l'intermédiaire des moyens (34) de prédéfinition et/ou d'adaptation variable en fonction du type d'actionnement manuel du battant (12).

4. Mécanisme d'entraînement selon la revendication 3, **caractérisé en ce que** les moyens (34) de prédéfinition et/ou d'adaptation variable du comportement d'entraînement sont conçus de telle sorte qu'après une ouverture normale prédéfinissable du battant (12) par un utilisateur respectif, en particulier à une vitesse normale prédéfinissable, le mouvement de fermeture subséquent du battant (12) est amorti de manière générative conformément à un réglage effectué lors de la mise en service.

5. Mécanisme d'entraînement selon la revendication 3 ou 4,
**caractérisé en ce que** les moyens (34) de prédéfinition et/ou d'adaptation variable du comportement d'entraînement sont conçus de telle sorte que, lors d'un actionnement plus rapide du battant (12) par un utilisateur respectif par comparaison à un actionnement normal prédéfinissable du battant (12), le mouvement d'ouverture du battant (12) est amorti de manière supplémentaire par rapport à un premier amortissement d'ouverture génératif constant par l'intermédiaire d'un second amortissement génératif variable, de telle sorte que le battant (12) s'arrête après avoir été relâché lorsque l'angle d'ouverture maximal a été atteint.

6. Mécanisme d'entraînement selon au moins l'une des revendications précédentes,
**caractérisé en ce que** le comportement d'entraînement peut être prédéfini ou adapté individuellement par l'intermédiaire des moyens (34) de prédéfinition et/ou d'adaptation variable selon qu'un utilisateur respectif souhaite ou non franchir la porte concernée avec des objets volumineux, un fauteuil roulant ou autres.

7. Mécanisme d'entraînement selon au moins l'une des revendications précédentes,
**caractérisé en ce que** le temps d'ouverture respectif pendant lequel le battant (12) est maintenu ouvert peut être réglé de manière variable par l'intermédiaire des moyens (34) de prédéfinition et/ou d'adaptation variable du comportement d'entraînement en fonction de la fréquence de franchissement actuelle de la porte concernée et/ou en fonction de l'heure de la journée.

8. Mécanisme d'entraînement selon au moins l'une des revendications précédentes,
**caractérisé en ce que** le mécanisme d'entraînement (10) comprend un dispositif de fixation qui peut être activé par un utilisateur respectif par l'intermédiaire des moyens (34) de prédéfinition et/ou d'adaptation variable du comportement d'entraînement à un angle d'ouverture qui peut notamment être sélectionné librement.

9. Mécanisme d'entraînement selon la revendication 8, **caractérisé en ce que** le battant (12) peut être immobilisé à l'encontre de la force de l'accumulateur mécanique (16) en faisant en sorte que le moteur électrique (18) soit alimenté en énergie électrique externe et/ou qu'un dispositif de freinage permettant d'agir sur un arbre moteur (20) du moteur électrique (18) soit commandé au moyen de l'électronique de commande et/ou de régulation (22).

10. Mécanisme d'entraînement selon la revendication 8 ou 9,
**caractérisé en ce que** les moyens (34) de prédéfinition et/ou d'adaptation variable du comportement d'entraînement sont conçus de telle sorte que le battant immobilisé (12) puisse être à nouveau libéré de son immobilisation par un utilisateur respectif.

11. Mécanisme d'entraînement selon au moins l'une des revendications précédentes,
**caractérisé en ce que** les moyens (34) de prédéfinition et/ou d'adaptation variable du comportement d'entraînement comprennent au moins un dispositif permettant une transmission manuelle, par commande vocale, par communication sans fil et/ou par une entrée similaire, du comportement d'entraînement souhaité par un utilisateur respectif.

12. Mécanisme d'entraînement selon au moins l'une des revendications précédentes,
**caractérisé en ce que** le mécanisme d'entraînement (10) comprend des moyens permettant de détecter la position actuelle, la vitesse actuelle et/ou l'accélération actuelle du battant (12) et **en ce que** les moyens (34) de prédéfinition et/ou d'adaptation variable du comportement d'entraînement sont conçus de telle sorte que le mouvement de fermeture et/ou d'ouverture du battant peut être amorti de manière générative en fonction de la position actuelle détectée du battant, de la vitesse actuelle détectée du battant et/ou de l'accélération actuelle détectée du battant.

13. Mécanisme d'entraînement selon au moins l'une des revendications précédentes,
**caractérisé en ce que** l'électronique de commande et/ou de régulation (22) comprend un circuit d'amortissement auquel les bornes du moteur électrique (18) peuvent être raccordées, et le circuit d'amortissement comprend au moins un élément de commutation par l'intermédiaire duquel les bornes du moteur électrique (18) peuvent être court-circuitées.

14. Mécanisme d'entraînement selon la revendication 13, **caractérisé en ce que** l'électronique de commande et/ou de régulation (22) comprend une unité de commande et/ou de régulation au moyen de laquelle l'élément de commutation peut être commandé de manière modulée par modulation de largeur d'impulsion pour amortir les mouvements des battants.
